# EUROPEAN PATENT SPECIFICATION

(11) **EP 2 597 714 B1**
(45) Date of publication and mention of the grant of the patent: **08.11.2017**
(21) Application number: 12194619.8
(22) Date of filing: 28.11.2012
(51) Int. Cl.: H01M 8/04082, H01M 8/0438, H01M 8/04664, H01M 8/0612, H01M 8/0662, H01M 8/124

(54) **Fuel cell system**
Brennstoffzellensystem
Système de pile à combustible

(30) Priority: 28.11.2011 JP 2011258988
(43) Date of publication of application: 29.05.2013
(73) Proprietor: AISIN SEIKI KABUSHIKI KAISHA, Kariya-shi, Aichi 448-8650 (JP)
(72) Inventor: Ohkawara, Hiroki, Kariya-shi,, Aichi 448-8650 (JP)
(74) Representative: TBK

(56) References cited:
- JP-A- 2005 310 550
- JP-A- 2009 123 600
- JP-A- 2009 205 825
- JP-A- 2009 289 715
- US-A1- 2010 151 343

## Description

### TECHNICAL FIELD

This disclosure generally relates to a fuel cell system.

### BACKGROUND DISCUSSION

A known fuel cell system is disclosed in JP2006-92789A, which will be hereinafter referred to as Reference 1. The fuel cell system disclosed in Reference 1 includes a gas passage connected to a fuel cell and a closed void is formed at a portion of the gas passage. An abnormality of the gas passage is determined on a basis of both a pressure and a temperature of the closed void. According to the fuel cell system disclosed in Reference 1, the fact that gas volume is influenced by temperature is paid attention. In determining the abnormality of the gas passage, a control portion of the fuel cell system considers not only the pressure of the closed void but also the temperature thereof. Thus, the control portion is inhibited from wrongly determining an occurrence of gas leakage from the closed void even through no gas leakage occurs at the closed void.

Another known fuel cell system is disclosed in JP2005-44653A, which will be hereinafter referred to as Reference 2. The fuel cell system disclosed in Reference 2 includes valves, a desulfurizer, and a reformer being arranged in series at a fuel gas passage. According to the fuel cell system disclosed in Reference 2, the valves are closed after a power generating operation of the fuel cell is terminated to thereby form a closed passage at the fuel gas passage. Because the temperature of the closed passage gradually decreases, gas volume within the closed passage decreases, which results in a gradual negative pressurization of the closed passage. The valves may be inhibited from smoothly opening in the negatively pressurized state. Therefore, a valve arranged at an upstream side among the plural valves is temporarily opened so that fuel gas is supplied to the fuel gas passage.

According to the fuel cell systems disclosed in References 1 and 2, it may be difficult to determine whether or not a closing function of the valve, i.e., a shutoff valve, provided at the fuel gas passage is in a normal state. In addition, it may be difficult to determine whether or not air tightness of a passage portion of the fuel gas passage is in a normal state.

According to the fuel cell system disclosed in Reference 1, it may be difficult to detect an abnormality of air tightness of the gas passage without a completely closed void. That is, it may be difficult to detect an abnormality such as, for example, gas leakage. In addition, in a case where anode gas that is obtained by reforming city gas by a reforming reaction is used, the abnormality of air tightness may be wrongly determined because a main pressure of city gas is generally low, for example, at 1.0 kPa to 2.5 kPa, which may be easily influenced by a temperature variation.

According to the fuel cell system disclosed in Reference 2, the control portion performs a control for eliminating the negative pressure at the fuel gas passage. However, detections of abnormality of air tightness of a conduit and gas leakage are not mentioned. In addition, when gas leakage occurs, the valve at the upstream side is temporarily opened to supply fuel gas to the fuel gas passage for the purpose of eliminating the negative pressure. Thus, the fuel gas supplied to the fuel gas passage my leak outside the fuel gas passage. Further, according to a gas appliance using city gas, a double valve constituted by two valves arranged in series is generally used. According to the fuel cell system disclosed in Reference 2, however, in a case where a command for closing one of the valves is output but the valve is maintained to open because of a foreign material jammed or stuck at the valve, such abnormality may be difficult to be detected. As a result, the fuel cell system may be operated for a long time period while one of the two valves is being maintained to open.

Document JP 2009 289715 A discloses a fuel cell system of the preamble of claim 1, having an electromagnetic valve and a gas pump. A gas sensor is arranged in the exhaust port.

Document JP 2009 289715 A discloses a fuel cell system having a first shutoff valve and a second shutoff valve. Downstream of the first shutoff valve there is a first pressure sensor, and downstream of the second shutoff valve there is a second pressure sensor. A further pressure sensor is provided. Furthermore, valves are provided which do not have a pressure sensor downstream thereof.

Document US 2010/0151343 A1 discloses a fuel cell system comprising a first shutoff valve, a second shutoff valve, and a third shutoff valve. Downstream of the first shutoff valve there is a first pressure sensor, downstream of the second shutoff valve there is a second pressure sensor, and downstream of the third shutoff valve there is a third pressure sensor.

It is the object to provide a fuel cell system that may easily determine whether or not a closing function of a shutoff valve provided at a fuel gas passage is normal, and whether or not air tightness of a passage portion of the fuel gas passage is normal.

### SUMMARY

The object is solved by a fuel cell system having the features of claim 1. Further developments are stated in the dependent claims.

Thus, in the invention, a fuel cell system includes a fuel cell including an anode
and a cathode, a cathode gas passage supplying cathode gas to the cathode of the fuel cell, a fuel gas passage supplying fuel gas to the anode of the fuel cell, a first gas supply source provided at the fuel gas passage, a shutoff valve provided at an upstream side in view of a flow direction of fuel gas relative to the first gas supply source at the fuel gas passage, a pressure detecting member detecting a gas pressure of a passage portion of the fuel gas passage between the shutoff valve and the first gas supply source, and a control portion receiving a detection signal from the pressure detecting member and controlling the first gas supply source and the shutoff valve. The control portion performs a determination process in a state where the control portion controls the shutoff valve to be opened and drives the first gas supply source to supply fuel gas to a downstream side in view of the flow direction of fuel gas relative to the first gas supply source at the fuel gas passage, the control portion determining in the determination process whether or not the gas pressure of the passage portion detected by the pressure detecting member decreases to or below a predetermined pressure after the control portion controls the shutoff valve to be closed while driving the first gas supply source, the control portion determining that a closing function of the shutoff valve is normal and an air tightness of the passage portion is normal in a case where the gas pressure of the passage portion detected by the pressure detecting member decreases to or below the predetermined pressure.

Accordingly, in the determination process, the shutoff valve is closed so that fuel gas is inhibited from being supplied to the fuel gas passage via the shutoff valve from a gas source. Nevertheless, the first gas supply source is driven to supply fuel gas at the fuel gas passage to the
downstream side relative to the first gas supply source. Therefore, the pressure of the passage portion of the fuel gas passage between the shutoff valve and the first gas supply source (i.e., the passage portion at the downstream side relative to the shutoff valve and at the upstream side relative to the first gas supply source) may be promptly reduced (for example, the passage portion is promptly negatively pressurized).

In the determination process, the control portion determines whether or not the pressure of the passage portion detected by the pressure detecting member decreases to or below the predetermined pressure. In a case where the pressure detected by the pressure detecting member decreases to or below the predetermined pressure, the control portion determines that the shutoff valve is normally closed and the air tightness of the passage portion is normal. The normal closing of the shutoff valve and the normal air tightness of the passage portion of the fuel gas passage are important for the operation of the fuel cell system.

In the determination, it is important whether the pressure of the passage portion between the shutoff valve and the first gas supply source decreases (for example, the passage portion is negatively pressurized). Thus, although a pressure value detected by the pressure detecting member is important, an influence of temperature of fuel gas is small or substantially zero. The pressure detecting member may detect a physical quantity related to the gas pressure of the passage portion of the fuel gas passage between the shutoff valve and the first gas supply source. For example, a pressure sensor or a pressure switch may be applied to the pressure detecting member. The determination process may be performed during the power generating operation or when the power generating operation is not performed.

The shutoff valve includes a first shutoff valve and a second shutoff valve arranged in series at the fuel gas passage, the first shutoff valve being provided at the upstream side while the second shutoff valve being provided at the downstream side at the fuel gas passage. The control portion performs a first determination process and thereafter a second determination process in a state where the control portion controls the first shutoff valve and the second shutoff valve to be opened and drives the first gas supply source to supply fuel gas to the downstream side relative to the first gas supply source at the fuel gas passage. The control portion determines in the first determination process whether or not the gas pressure of the passage portion detected by the pressure detecting member decreases to or below the predetermined pressure after the control portion controls one of the first shutoff valve and the second shutoff valve to be closed while driving the first gas supply source. The control portion determines in the first determination process that the closing function of the one of the first shutoff valve and the second shutoff valve is normal and the air tightness of the passage portion is normal in a case where the gas pressure of the passage portion detected by the pressure detecting member decreases to or below the predetermined pressure. The control portion determines in the second determination process whether or not the gas pressure of the passage portion detected by the pressure detecting member decreases to or below the predetermined pressure after the control portion controls the other of the first shutoff valve and the second shutoff valve to be closed while driving the first gas supply source. The control portion determines in the second determination process that the closing function of the other of the first shutoff valve and the second shutoff valve is normal and the air tightness of the passage portion is normal in a case where the gas pressure of the passage portion detected by the pressure detecting member decreases to or below the predetermined pressure.

In the first determination process, the control portion determines that the closing function of one of the first and second shutoff valves is normal and the air tightness of the passage portion is normal. In the second determination process, the control portion determines that the closing function of the other of the first and second shutoff valves is normal and the air tightness of the passage portion is normal.

The determination process is performed during a power generating operation of the fuel cell, and the control portion continues the power generating operation in a case where the shutoff valve and the passage portion are determined to be normal in the determination process, the control portion outputting an alert in a case where the shutoff valve and the passage portion are inhibited from being determined to be normal in the determination process.

In the determination process, the first gas supply source is driven to supply fuel gas at the fuel gas passage to the downstream side relative to the first gas supply source so that the fuel gas is supplied to the downstream side. Thus, while the determination process is being performed, fuel gas may be supplied to the downstream side relative to the first gas supply source. The control portion may perform the determination process during the power generating operation of the fuel cell. In a case where the shutoff valve and the passage portion are determined to be normal in the determination process, the control portion continues the power generating operation. In a case where the shutoff valve and the passage portion are inhibited from being determined to be normal in the determination process, the control portion outputs an alert. The alert may be achieved by an alert to a user or a maintenance company, or a stop of the power generating operation of the fuel cell system, for example.

The control portion outputs a command to the shutoff valve to repeatedly and alternately open and close multiple times in a case where the closing function of the shutoff valve and the air tightness of the passage portion are inhibited from being determined to be normal in the determination process and thereafter performs the determination process again.

In a case where the shutoff valve and the passage portion are inhibited from being determined to be normal in the determination process, the closing function of the shutoff valve my be highly possibly reduced or deteriorated. A foreign material may be stuck or jammed in the shutoff valve. In this case, the shutoff valve is inhibited from being normally closed, which results in a decrease of the closing function. Thus, the control portion controls the shutoff valve to repeatedly and alternately open and close multiple times. Consequently, the foreign material stuck in the shutoff valve may be removed to thereby return the shutoff valve to the normal state. At this
time, a suction force may be desirably generated at the shutoff valve by the driving of the first gas supply source. The suction force may cause the foreign material to be easily removed from the shutoff valve.

The cathode gas passage includes a second gas supply source supplying cathode gas to the cathode of the fuel cell, the cathode gas passage being configured in a manner that gas discharged from the anode of the fuel cell and cathode gas or cathode-off gas discharged from the cathode of the fuel cell via the second gas supply source are converged at the cathode gas passage. The control portion performs a dilution operation for diluting gas discharged from the anode of the fuel cell with cathode gas or cathode-off gas discharged from the cathode of the fuel cell by driving the second gas supply source to supply cathode gas to the cathode gas passage in one of cases during the determination process, immediately after the determination process is performed, and immediately before the determination process is performed.

Accordingly, in the determination process, the concentration of combustible gas may be diluted with cathode gas serving as air or cathode-off gas before the combustible gas is discharged from the anode of the fuel cell.

The cathode gas passage includes a second gas supply source supplying cathode gas to the cathode of the fuel cell. The fuel gas passage supplying fuel gas before being reformed to a reformer includes a desulfurizer desulfurizing fuel gas and the reformer reforming fuel gas that is desulfurized by the desulfurizer into anode gas including hydrogen by a reforming reaction based on water vapor generated by water that is supplied by a water supply source. The control portion performs a stop mode for cooling the fuel cell by cathode gas supplied to the cathode of the fuel cell by driving the second gas supply source while maintaining the anode of the fuel cell in a reducing atmosphere by driving the first gas supply source to supply fuel gas to the reformer to generate hydrogen containing gas by the reforming reaction in a case where a command for terminating a power generating operation is output. The control portion performs a standby mode after the stop mode for maintaining the first gas supply source and the second gas supply source to be stopped. The control portion performs the determination process in one of cases in the stop mode, shifting from the stop mode to the standby mode, and in the standby mode.

Because the stop mode and the standby mode are not present in the power generating operation of the fuel cell, the determination process may be repeatedly performed multiple times, which results in an increased determination accuracy. In a case where the shutoff valve and the passage portion are inhibited from being determined to be normal in the determination process, malfunctions of the shutoff valve and the fuel gas passage may be cleared by the time the next power generating operation is initiated.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic view in the vicinity of a fuel gas passage of a fuel cell system according to a first embodiment disclosed here;
Fig. 2 is a schematic view in the vicinity of a fuel gas passage of a fuel cell system according to a second embodiment disclosed here;
Fig. 3 is a flow chart illustrating a control performed by a control portion according to a third embodiment disclosed here;
Fig. 4 is a flow chart illustrating a control performed by a control portion according to a fourth embodiment disclosed here;
Fig. 5 is a schematic view of a fuel cell system according to a fifth embodiment disclosed here; and
Fig. 6 is a diagram illustrating a control portion according to the fifth embodiment.

### DETAILED DESCRIPTION

### [First embodiment]

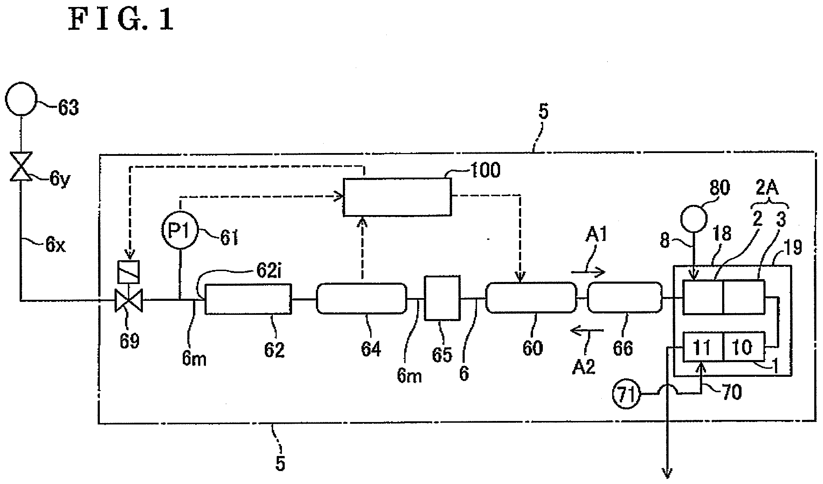

A fuel cell system according to a first embodiment will be explained. As illustrated in Fig. 1, the fuel cell system includes a fuel cell 1 having an anode 10 and a cathode 11, the anode 10 and the cathode 11 disposing an electrolyte therebetween, a cathode gas passage 70, a fuel gas passage 6, a first gas pump 60, a shutoff valve 69, a pressure sensor 61, a control portion 100, and a case 5. The cathode gas passage 70 supplies cathode gas, which is generally air, to the cathode 11. The fuel gas passage 6 supplies fuel gas to the anode 10 of the fuel cell 1. The first gas pump 60 serving as a first gas supply source is provided at the fuel gas passage 6. The shutoff valve 69 is provided at the fuel gas passage 6 so as to be positioned at an upstream side of the first gas pump 60, i.e., at an inlet side of the fuel gas passage 6, in view of a flow direction of fuel gas. The pressure sensor 61 serving as a pressure detecting member detects a gas pressure at a passage portion 6m of the fuel gas passage 6 between the shutoff valve 69 and the first gas pump 60. The control portion 100 receives a detection signal from the pressure sensor 61 and controls the first gas pump 60 and the shutoff valve 69. The case 5 houses the aforementioned members, i.e., the fuel cell 1, the cathode gas passage 70, the fuel gas passage 6, the first gas pump 60, the shutoff valve 69, the pressure sensor 61, and the control portion 100, for example.

The fuel gas passage 6 supplies fuel gas before being reformed, for example, city gas, to a reformer 2A. As illustrated in Fig. 1, the shutoff valve 69, the pressure sensor 61, a desulfurizer 62 desulfurizing fuel gas, a flow meter 64, a buffer tank 65 including a hollow chamber, the first gas pump 60, the check valve 66 serving as an on-off valve, and a power generation module 18 are arranged in series in the mentioned order at the fuel gas passage 6 from the inlet side thereof. At this time, however, the arrangement order is not limited to the above. A gas conduit 6x connected to a gas source 63 and a main pressure valve 6y connected to the gas source 63 are provided at the upstream side of the shutoff valve 69. The gas source 63 and the main pressure valve 6y are arranged at an outside of the case 5.

The power generation module 18 includes the reformer 2A connected to the fuel gas passage 6, the fuel cell 1 provided at a downstream side of the reformer 2A in view of a flow direction of fuel gas, and an insulation wall 19 surrounding the reformer 2A and the fuel cell 1. The reformer 2A is also connected to a water supply passage 8. The reformer 2A includes an evaporating portion 2 heating water in a liquid phase supplied from a water pump 80 serving as a water supply source to thereby generate water vapor, and a reforming portion 3 causing fuel gas to be reformed and reacted by the water vapor generated at the evaporating portion 2 so that the fuel gas is reformed to anode gas including hydrogen. The check valve 66 causes fuel gas to flow from the first gas pump 60 to the reformer 2A of the power generation module 18 in a direction of an arrow A1. In a case where the pressure applied from the fuel gas passage 6 to the check valve 66 decreases, the check valve 66 is automatically closed to thereby inhibit a flow of fuel gas in a direction of an arrow A2. The pressure sensor 61 is arranged at the fuel gas passage 6 and, specifically, is provided between the shutoff valve 69 and an inlet 62i of the desulfurizer 62. Such arrangement of the pressure sensor 61 is to desirably detect the pressure (negative pressure) at the upstream side of the fuel gas passage 6 to thereby promptly terminate a determination process, which will be explained later. A second gas pump 71 serving as a second gas supply source is provided at the cathode gas passage 70 so as to supply cathode gas to the cathode 11 of the fuel cell 1. A detection signal detected by the pressure sensor 61 and a detection signal detected by the flow meter 64 are input to the control portion 100. The control portion 100 controls system devices, for example, the shutoff valve 69, the first gas pump 60, the second gas pump 71, and the water pump 80.

In a power generating operation of the fuel cell 1, the first gas pump 60 is driven to supply fuel gas from the gas source 63 in the direction of the arrow A1 to the reformer 2A of the power generation module 18 provided at the downstream side of the first gas pump 60 in a state where the main pressure valve 6y and the shutoff valve 69 are both opened. The fuel gas supplied to the reformer 2A is reformed to anode gas including hydrogen via a reforming reaction. The anode gas is supplied to the anode 10 of the fuel cell 1. In the power generating operation of the fuel cell 1, the second gas pump 71 is driven to supply cathode gas (air) to the cathode 11 of the fuel cell 1 of the power generation module 18. Accordingly, the fuel cell 1 performs the power generating operation to generate an electric power.

In a case where the first gas pump 60 is driven in a state where the shutoff valve 69 is opened to supply fuel gas, for example, city gas, to the power generation module 18 provided at the downstream side of the first gas pump 60 as mentioned above, the control portion 100 performs the determination process. Specifically, the control portion 100 controls the shutoff valve 69 to be closed in a state where the first gas pump 60 is driven to supply the fuel gas to flow towards the downstream side indicated by the arrow A1. Then, after the shutoff valve 69 is closed, the control portion 100 determines whether or not a pressure P1 serving as a gas pressure at the passage portion 6m detected by the pressure sensor 61 decreases to or below a predetermined pressure PA (kPa). In a case where the pressure P1 detected by the pressure sensor 61 decreases to or below the predetermined pressure PA within a predetermined time period from a reference time, the control portion 100 determines that a closing function of the shutoff valve 69 is normal, i.e., the shutoff valve 69 is normally and appropriately closed, and air tightness of the passage portion 6m is normal, i.e., air tightness of the passage portion 6m is normally and appropriately obtained. In a case where the shutoff valve 69 is unable to close or the air tightness of the passage portion 6m is abnormal (in an error state), the pressure P1 of the passage portion 6m is inhibited from decreasing to or below the predetermined pressure PA. The reference time may be specified to be timing when a signal for closing the shutoff valve 69 is output or timing when the shutoff valve 69 is closed, for example.

In the determination by the control portion 100, whether or not the pressure at the passage portion 6m between the shutoff valve 69 and the first gas pump 60 at the fuel gas passage 6 is reduced (for example, the passage portion 6m is negatively pressurized) is important. Therefore, an influence of temperature of fuel gas is small or substantially zero.

According to the first embodiment, the determination process is performed during the power generating operation of the fuel cell 1. In the determination process, in a case where it is determined that the shutoff valve 69 and the air tightness of the passage portion 6m are normal, the control portion 100 immediately opens the shutoff valve 69 to continue the power generating operation of the fuel cell 1. Because the first gas pump 60 is driven and fuel gas is supplied to the power generation module 18 during the aforementioned determination process, the reforming reaction at the reformer 2A is maintained and thus the power generating operation of the fuel cell 1 is maintained. As illustrated in Fig. 1, the pressure sensor 61 is provided immediately at the downstream side of the shutoff valve 69 at the fuel gas passage 6, i.e., is provided between the shutoff valve 69 and the desulfurizer 62. Therefore, the pressure sensor 61 immediately detects the negative pressurization (pressure reduction) of the passage portion 6m, which leads to a reduction of time for the determination process and an inhibition of influence of the determination process on the power generating operation.

On the other hand, in a case where it is not determined that the shutoff valve 69 and the passage portion 6m are normal, i.e., the shutoff valve 69 and the passage portion 6m are abnormal, the control portion 100 outputs an alert. The alert may be achieved by a warning device, an alert to a user or a maintenance company, or a stop of the power generation of the fuel cell system, for example.

During the aforementioned determination process, as mentioned above, fuel gas of the fuel gas passage 6 is supplied in the arrow A1 direction to the downstream side relative to the first gas pump 60 by the driving of the first gas pump 60. Thus, the control portion 100 may perform the determination process even while the power generating operation of the fuel cell 1 is being performed. In a case where it is determined that the shutoff valve 69 and the passage portion 6m are normal in the determination process, the control portion 100 continues the power generating operation. The determination process may be performed per specified time period periodically or performed on an irregular basis during the power generating operation so as to increase security.

Because the shutoff valve 69 is closed in the determination process, the flow rate of fuel gas supplied from the fuel gas passage 6 to the power generation module 18 may decrease instantaneously depending on conditions of the fuel cell system, for example. Nevertheless, in view of fuel gas that exists over a passage length of the fuel gas passage 6 from the shutoff valve 69 to the first gas pump 60 and that exits in the hollow chamber of the buffer tank 65, an influence on the power generating operation of the fuel cell 1 may be restrained. The buffer tank 65 may be desirably provided between the shutoff valve 69 and the first gas pump 60 accordingly.

The control portion 100 may perform the determination process not only when the power generating operation is performed but also when the power generating operation is not performed, for example, when the fuel cell system is in a stop mode (which will be explained later), when the fuel cell system is shifted from the stop mode to a standby mode (which will be explained later), or when the fuel cell system is in the standby mode.

In a case where it is not determined that the shutoff valve 69 and the passage portion 6m are in the normal states in the determination process, the control portion 100 may perform a wrong detection prevention control or process (i.e., a jamming release control or process) by outputting a command to the shutoff valve 69 to repeatedly and alternately open and close multiple times. In this case, after the wrong detection prevention control is performed, the control portion 100 may desirably perform the determination process again. When it is not determined that the shutoff valve 69 and the passage portion 6m are normal in the determination process, a foreign material may be stuck at the shutoff valve 69, which inhibits a complete closing of the shutoff valve 69 and deteriorates the air tightness of the shutoff valve 69. Therefore, the control portion 100 controls the shutoff valve 69 to repeatedly and alternately open and close multiple times. Then, because a foreign material stuck in the shutoff valve 69 is likely to be removed, the shutoff valve 69 may be highly possibly returned to a normal state. At this time, the first gas pump 60 is driven to rotate so as to suction the shutoff valve 69, thereby easily remove a foreign material from the shutoff valve 69.

According to the first embodiment, gas discharged from the anode 10 of the fuel cell 1 and cathode gas (air) or cathode-off gas discharged from the cathode 11 of the fuel cell 1 via the second gas pump 71 may be desirably converged at the cathode gas passage 70. At this time, the control portion 100 may desirably supply cathode gas, i.e., air, to the cathode gas passage 70 by driving the second gas pump 71 at least in one of cases during the determination process, immediately after the completion of the determination process, and immediately before the start of the determination process. In this case, combustible gas discharged from the anode 10 of the fuel cell 1 may be diluted by cathode gas (air) or cathode-off gas. That is, the control portion 100 performs a dilution operation for diluting gas discharged from the anode 10 of the fuel cell 1 with cathode gas or cathode-off gas discharged from the cathode 11 of the fuel cell 1 by driving the second gas pump 71 to supply cathode gas to the cathode gas passage 70. In the case of the power generating operation being performed, anode-off gas is burnt by cathode-off gas.

In a case where the main pressure valve 6y is closed by mistake in a state where the shutoff valve 69 is open and the first gas pump 60 is driven immediately after the determination that the shutoff valve 69 and the passage portion 6m are normal (i.e., within a predetermined time period after the completion of the determination process), the pressure at the passage portion 6m of the fuel gas passage 6 provided at the upstream side relative to the first gas pump 60 is negatively pressurized. Nevertheless, because the aforementioned matter occurs immediately after the determination that the shutoff valve 69 and the air tightness of the passage portion 6m are normal, the control portion 100 may recognize that the matter is caused by the closing of the main pressure valve 6y instead of the abnormality of the shutoff valve 69 and the passage portion 6m. Accordingly, the control portion 100 alerts the closing of the main pressure valve 6y to a user or a maintenance company, for example. The fuel cell system may be stopped as necessary.

### [Second embodiment]

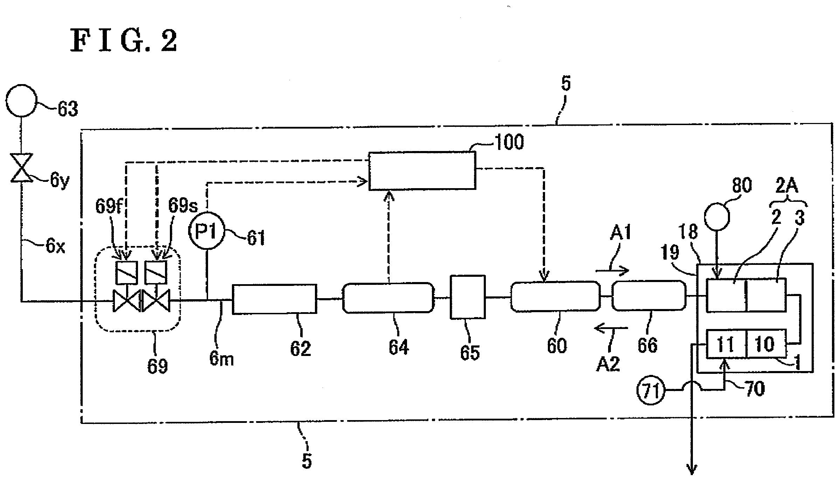

A second embodiment will be explained with reference to Fig. 2. The second embodiment basically includes the same effects as those of the first embodiment. In the following, a difference of the second embodiment from the first embodiment will be mainly explained. The shutoff valve 69 includes a first shutoff valve 69f provided at the upstream side and a second shutoff valve 69s provided at the downstream side, the first shutoff valve 69f and the second shutoff valve 69s being arranged in series at the fuel gas passage 6. The control portion 100 performs a first determination process. Specifically, the control portion 100 performs the first determination process in a state where the first shutoff valve 69f and the second shutoff valve 69s are both opened and the first gas pump 60 is driven to thereby supply fuel gas to the downstream side of the first gas pump 60. First, in the aforementioned state, the first shutoff valve 69f is closed while the first gas pump 60 is being driven. Then, after the first shutoff valve 69f is closed, the control portion 100 determines whether or not the pressure P1 of the passage portion 6m detected by the pressure sensor 61 decreases to or below the predetermined pressure PA (for example, the passage portion 6m is negatively pressurized) within the predetermined time period. In a case where the pressure P1 detected by the pressure sensor 61 decreases to or below the predetermined pressure PA, the control portion 100 determines that the closing function of the first shutoff valve 69f is normal and the air tightness of the passage portion 6m (i.e., a passage portion from the first shutoff valve 69f to the first gas pump 60) is normal.

In a case where the closing function of the first shutoff valve 69f is normal and the air tightness of the passage portion 6m is normal, the control portion 100 consecutively performs a second determination process. In the second determination process, the control portion 100 controls the second shutoff valve 69s to be closed while the first gas pump 60 is being driven. After the second shutoff valve 69s is closed, the control portion 100 determines whether or not the pressure P1 of the passage portion 6m detected by the pressure sensor 61 decreases to or below the predetermined pressure PA within the predetermined time period. In a case where the pressure P1 detected by the pressure sensor 61 decreases to or below the predetermined pressure PA, the control portion 100 determines that the closing function of the second shutoff valve 69s is normal and the air tightness of the passage portion 6m (i.e., the passage portion from the second shutoff valve 69s to the first gas pump 60) is normal.

As mentioned above, the control portion 100 may determine that the closing function of the first shutoff valve 69f is normal and the air tightness of the passage portion 6m is normal in the first determination process, and may determine that the closing function of the second shutoff valve 69s is normal and the air tightness of the passage portion 6m is normal in the second determination process. In this case, alternatively whether or not the second shutoff valve 69s is normal may be determined in the first determination process while whether or not the first shutoff valve 69f is normal may be determined in the second determination process.

According to the second embodiment, as well as the first embodiment, the control portion 100 may perform the wrong detection prevention control by outputting a command to each of the first and second shutoff valves 69f and 69s to repeatedly and alternately open and close multiple times in a case where it is not determined that the shutoff valve 69 (the first and second shutoff valves 69f and 69s) is in the normal state in the determination process. After the wrong detection prevention control, the first and second determination processes may be performed again. In a case where it is not determined that the first and second shutoff valves 69f and 69s are normal, a.foreign material may be stuck at the first and second shutoff valves 69f and 69s. Then, the control portion 100 controls the first shutoff valve 69f at the upstream side to repeatedly and alternately open and close multiple times while a suction force is generated at the first and second shutoff valves 69f and 69s by the driving of the first gas pump 60 in a state where the second shutoff valve 69s at the downstream side is opened. Further, the control portion 100 controls the second shutoff valve 69s to repeatedly and alternately open and close multiple times. Because a foreign material stuck in the first and second shutoff valves 69f and 69s may be easily removed by the aforementioned suction force, each of the first and second shutoff valves 69f and 69s may be highly possibly returned to a normal state. The first and second shutoff valves 69f and 69s may be controlled to open and close at the same time or separately.

### [Third embodiment]

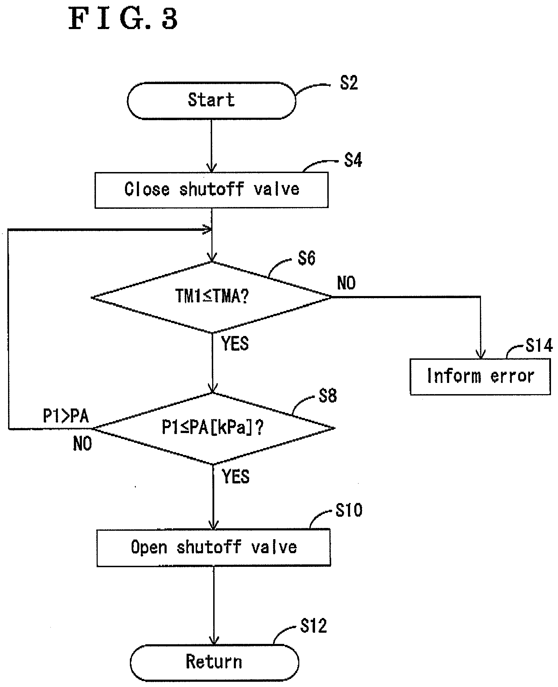

A third embodiment will be explained with reference to Fig. 3. The third embodiment basically includes the same effects as those of the first and second embodiments. In the following, a difference of the third embodiment from the first and second embodiments will be mainly explained. Fig. 3 is a flowchart of the determination process performed by the control portion 100. In a case where the control portion 100 receives a command (logic command) for detecting an abnormality of air tightness from a user or the other control portion during the power generating operation, the control portion 100 starts a flow of the determination process in Step 2 (hereinafter "Step" will be abbreviated to "S"). The control portion 100 closes the shutoff valve 69 in a state where the first gas pump 60 is driven to supply fuel gas to the power generation module 18 in S4. The control portion 100, which includes a timer function, measures an elapsed time TM1 from time when the shutoff valve 69 is closed. In S6, the control portion 100 determines whether or not the elapsed time TM1 exceeds a predetermined time period TMA from time (i.e., reference time) when the shutoff valve 69 is closed. In a case where the elapsed time TM1 is inhibited from exceeding the predetermined time period TMA, i.e., the elapsed time TM1 is equal to or smaller than the predetermined time period TMA (YES in S6), the control portion 100 proceeds the flow to S8 to determine whether or not the pressure P1 detected by the pressure sensor 61 is equal to or smaller than the predetermined pressure PA. In a case where the pressure P1 is equal to or smaller than the predetermined pressure PA (YES in S8), the pressure of the passage portion 6m of the fuel gas passage 6 is negatively pressurized (or reduced) because of the closed shutoff valve 69 while the first gas pump 60 is being driven. In this case, the control portion 100 determines that the closing function of the shutoff valve 69 is normal and the air tightness of the passage portion 6m of the fuel gas passage 6 between the shutoff valve 69 and the inlet of the check valve 66 is normal to thereby proceed the flow to S10. In S10, the control portion 100 sets a flag indicating the normal state of the closing function of the shutoff valve 69 and the air tightness of the passage portion 6m of the fuel gas passage 6. The control portion 100 then opens the shutoff valve 69. The flow presently conducted is terminated in S12 and returns to a main routine. In the aforementioned determination process, in a case where it is determined that the closing function of the shutoff valve 69 is normal and the air tightness of the passage portion 6m of the fuel gas passage 6 is normal, a flow rate of fuel gas and anode gas supplied to the fuel cell 1 is highly accurately maintained. Therefore, the control portion 100 continues the power generating operation of the fuel cell 1.

In a case where the pressure P1 is greater than the predetermined pressure PA (NO in S8), the control portion 100 returns the flow immediately before S6 to repeat determinations in S6 and S8. In a case where the pressure P1 is inhibited from decreasing to or below the predetermined pressure PA, i.e., the passage portion 6m is inhibited from turning to the negative pressure (NO in S6), it means that even when the shutoff valve 69 is closed and the first gas pump 60 is driven, the pressure of the passage portion 6m of the fuel gas passage 6 is inhibited from decreasing (the passage portion 6m is inhibited from being negatively pressurized). In this case, an abnormality of air tightness of the fuel gas passage 6, for example, gas leakage at the passage portion 6m or a failure of closing function of the shutoff valve 69 (i.e., even when a command for closing the shutoff valve 69 is output, the shutoff valve 69 is kept open) is determined. The control portion 100 activates an alarm, i.e., informs the error state to a user or a maintenance company, for example, in S14. Further, the fuel cell system may be desirably stopped as necessary.

In a case where the shutoff valve 69 is a double valve by including the first and second shutoff valves 69f and 69s, the determination process on one of the first and second shutoff valves 69f and 69s may be desirably conducted and thereafter the determination process on the other of the first and second shutoff valves 69f and 69s may be conducted. The control portion 100 performs the determination process on each of the plural shutoff valves 69f and 69s to detect whether or not the abnormality of air tightness (i.e., closing function) occurs on each of the plural shutoff valves 69f and 69s. Because the failure (i.e., closing failure) may be detected on each of the first and second shutoff valves 69f and 69s constituting the double valve, security of the fuel cell system may be further improved. The determination process may be performed while the power generating operation is not being performed.

According to the present embodiment, in a case where the second gas pump 71 is not driven because the power generating operation is not performed, for example, at least in one of cases during the determination process, immediately after the determination process is performed, and immediately before the determination process is performed, the control portion 100 may desirably drive the second gas pump 71 so as to supply cathode gas (air) to the cathode gas passage 70. In this case, combustible gas discharged from the anode 10 of the fuel cell 1 may be diluted by cathode gas (air) or cathode-off gas.

### [Fourth embodiment]

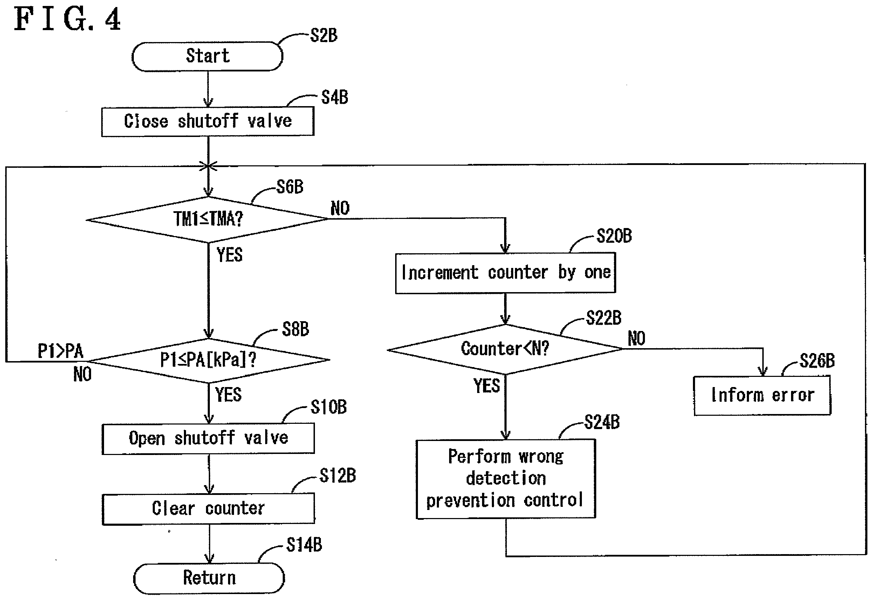

A fourth embodiment will be explained with reference to Fig. 4. The fourth embodiment basically includes the same effects as those of the first to third embodiments. In the following, a difference of the fourth embodiment from the first to third embodiments will be mainly explained. Fig. 4 is a flow of the determination process performed by the control portion 100. In a case where the control portion 100 receives a command (logic command) for detecting an abnormality of air tightness, the control portion 100 starts the flow of the determination process during the power generating operation of the fuel cell 1 in S2B. The control portion 100 closes the shutoff valve 69 in a state where the first gas pump 60 is driven to supply fuel gas to the power generation module 18 in S4B. In S6B, the control portion 100 determines whether or not the elapsed time TM1 exceeds the predetermined time period TMA from time (i.e., reference time) when the shutoff valve 69 is closed. In a case where the elapsed time TM1 is inhibited from exceeding the predetermined time period TMA, i.e., the elapsed time TM1 is equal to or smaller than the predetermined time period TMA, the control portion 100 proceeds the flow to S8B to determine whether or not the pressure P1 detected by the pressure sensor 61 is equal to or smaller than the predetermined pressure PA. In a case where the pressure P1 is equal to or smaller than the predetermined pressure PA, the pressure of the passage portion 6m of the fuel gas passage 6 is negatively pressurized (turns to the negative pressure) because of the closed shutoff valve 69 while the first gas pump 60 is being driven. In this case, the control portion 100 determines that the closing function of the shutoff valve 69 is normal and the air tightness of the passage portion 6m of the fuel gas passage 6 between the shutoff valve 69 and the check valve 66 is normal to thereby proceed the flow to S10B. In S10B, the control portion 100 sets a flag indicating the normal state of the closing function of the shutoff valve 69 and the air tightness of the passage portion 6m of the fuel gas passage 6. The control portion 100 then opens the shutoff valve 69 and continues the power generating operation. The control portion 100 clears a counter in S12B and terminates the present flow in S14B to return the flow to a main routine. Because it is determined that the closing function of the shutoff valve 69 is normal and the air tightness of the passage portion 6m of the fuel gas passage 6 is normal in the determination process, a flow rate of the fuel gas supplied to the fuel cell 1 is highly accurately maintained. Therefore, the control portion 100 continues the power generating operation of the fuel cell 1.

In a case where the pressure P1 is greater than the predetermined pressure PA, i.e., the pressure at the passage portion 6m is inhibited from turning to the negative pressure, the control portion 100 returns the flow immediately before S6B to repeat determinations in S6B and S8B. In a case where the pressure P1 is inhibited from decreasing to or below the predetermined pressure PA, i.e., the passage portion 6m is inhibited from turning to the negative pressure, it means that, even when the shutoff valve 69 is closed and the first gas pump 60 is driven, the pressure of the passage portion 6m of the fuel gas passage 6 is inhibited from turning to the negative pressure. In this case, an abnormality of air tightness of the fuel gas passage 6, for example, gas leakage at the passage portion 6m or a failure of closing function of the shutoff valve 69 (i.e., even when a command for closing the shutoff valve 69 is output, the shutoff valve 69 is kept open) is determined. Thus, the control portion 100 increments the counter by one in S20B. At this time, in a case where the value of the counter is smaller than a value N (YES in S22B), the wrong detection prevention control is performed in S24B and the flow returns to S6B. In the wrong detection prevention control, the control portion 100 repeats outputting a command M times, the command including the opening of the shutoff valve 69 for a time period TMB (sec) and the closing of the shutoff valve 69 for the time period TMB (sec), in a state where the suction force is generated at the shutoff valve 69 by the driving of the first gas pump 60. The flow is then returned to S6B. A foreign material stuck in the shutoff valve 69 may be possibly removed in the aforementioned wrong detection prevention control. When the counter value is equal to or greater than the value N (NO in S22B) in a case of a possible abnormality of air tightness (NO in S6B), the control portion 100 determines the abnormality of air tightness. The control portion 100 activates an alarm, i.e., informs the error state to a user or a maintenance company, for example, in S26B. Further, the fuel cell system may be desirably stopped as necessary. In a case where the shutoff valve 69 is a double valve by including the first and second shutoff valves 69f and 69s, the determination process on one of the first and second shutoff valves 69f and 69s is conducted and thereafter the determination process on the other of the first and second shutoff valves 69f and 69s is conducted. The control portion 100 performs the determination process on each of the plural shutoff valves 69f and 69s to detect whether or not the closing function error, which leads to the abnormality of air tightness, occurs on each of the plural shutoff valves 69f and 69s. In a case where the flow in Fig. 4 is performed during the power generating operation, for example, the value N of the counter, M times of repeat, and the time period TMB for opening and closing the shutoff valve 69 during the wrong detection prevention control may be desirably specified so that the supply of anode gas is ensured relative to a required flow rate of anode gas.

According to the present embodiment, in a case where the second gas pump 71 is not driven because the power generating operation is not performed, for example, at least in one of cases during the determination process, immediately after the completion of the determination process, and immediately before the start of the determination process, the control portion 100 drives the second gas pump 71 so as to supply cathode gas to the cathode gas passage 70. In this case, combustible gas discharged from the anode 10 of the fuel cell 1 may be diluted by air (cathode gas or cathode-off gas). According to the present embodiment, the control portion 100 may desirably drive the second gas pump 71 to supply cathode gas to the cathode gas passage 70 at least in one of cases during the determination process, immediately after the completion of the determination process, and immediately before the start of the determination process.

### [Fifth embodiment]

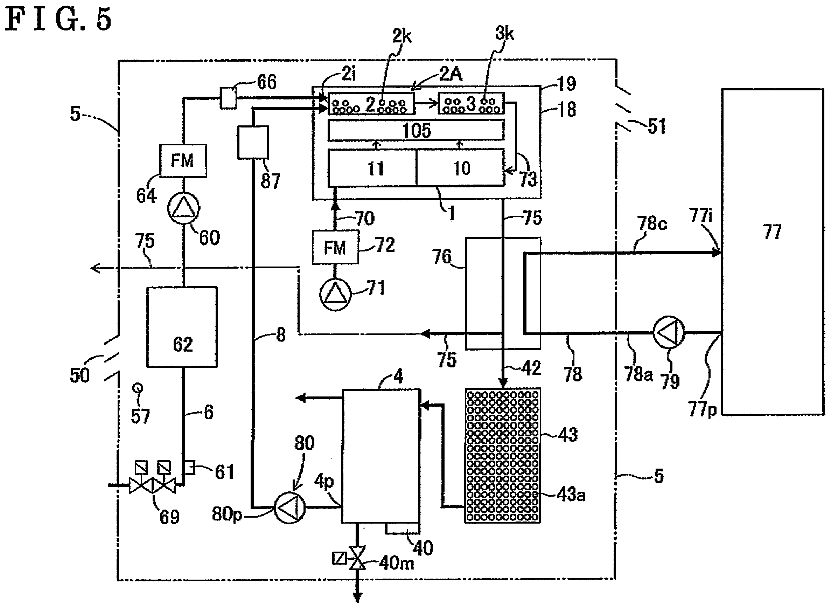

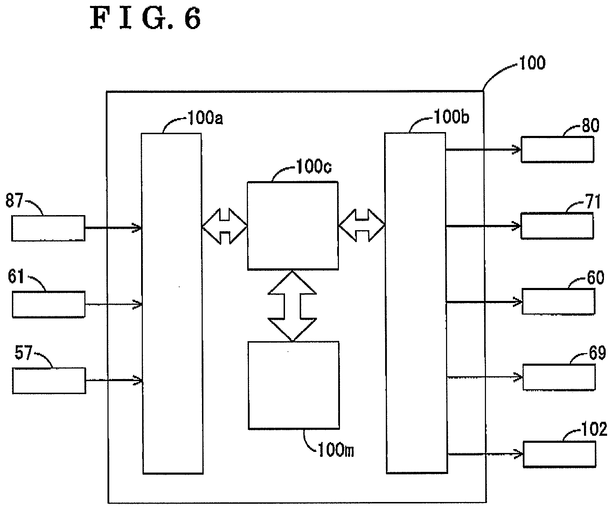

A fifth embodiment will be explained with reference to Figs. 5 and 6. The fifth embodiment basically includes the same effects as those of the first to fourth embodiments. In the following, a difference of the fifth embodiment from the first to fourth embodiments will be mainly explained. As illustrated in Fig. 5, the fuel cell system includes the fuel cell 1, the evaporating portion 2 evaporating water in a liquid phase to generate water vapor, the reforming portion 3 reforming fuel by using water vapor generated at the evaporating portion 2 so as to form anode gas, a water tank 4 storing water supplied to the evaporating portion 2, and the case 5 accommodating the fuel cell 1, the evaporating portion 2, the reforming portion 3, and the water tank 4. The fuel cell 1 includes the anode 10 and the cathode 11 between which an ionic conductor is disposed and sandwiched. For example, a solid oxide fuel cell (SOFC; an operation temperature is equal to or greater than 400 °C, for example) is applicable to the fuel cell 1.

The reforming portion 3 is formed by a ceramics carrier 3k on which a reforming catalyst is carried, and is arranged adjacent to the evaporating portion 2. The evaporating portion 2 includes a ceramics carrier 2k. Each of the ceramics carrier 3k and the ceramics carrier 2k is granular or honeycomb, for example. The reforming portion 3 and the evaporating portion 2 constitute the reformer 2A. The reformer 2A and the fuel cell 1 are surrounded by the insulation wall 19 to thereby form the power generation module 18. In the power generating operation of the fuel cell 1 (the fuel cell system), the reformer 2A is heated up within the insulation wall 19 so as to be suitable for reforming reaction. In the power generating operation, the evaporating portion 2 is heated up so as to heat water to obtain water vapor. A combusting portion 105 heats the reforming portion 3 and the evaporating portion 2. The fuel gas passage 6, which supplies fuel from the gas source 63 to the reformer 2A, includes the shutoff valve 69, the desulfurizer 62, the first gas pump 60, and the flow meter 64 of which an arrangement order may not be specified. The cathode gas passage 70 is connected to the cathode 11 of the fuel cell 1 to supply cathode gas (air) to the cathode 11. The second gas pump (cathode gas pump) 71 serving as a cathode gas supply source for supplying cathode gas, and a flow meter 72 are provided at the cathode gas passage 70.

As illustrated in Fig. 5, the case 5 includes an intake port 50 and an exhaust port 51 connected to outside air. Further, the case 5 includes a temperature sensor 57 measuring the temperature in the vicinity (outside air) of the intake port 50. The temperature sensor 57 may be provided as necessary. The case 5 accommodates the water tank 4 storing water in a liquid phase reformed at the reforming portion 3. A drain valve 40m is provided at the water tank 4. In addition, a heating portion 40, for example, an electric heater, including a heating function is provided at the water tank 4 as necessary. The heating portion 40 formed by an electric heater, for example, heats up water stored in the water tank 4. In a case where an ambient temperature such as an outside temperature is low, the water in the water tank 4 is heated by the heating portion 40 based on a command from the control portion 100 to thereby avoid freezing. A water level in the water tank 4 may be basically substantially at the constant level. The water in the water tank 4 may overflow therefrom as indicated by an arrow extending from an upper portion of the water tank 4 as illustrated in Fig. 5.

As illustrated in Fig. 5, the water supply passage 8 serving as a conduit is provided within the case 5 so as to connect an outlet port 4p of the water tank 4 to an inlet port 2i of the evaporating portion 2. Because the water tank 4 is arranged at a lower side of the evaporating portion 2 within the case 5, the water supply passage 8 basically substantially extends in a vertical direction. The water supply passage 8 is a passage through which the water stored in the water tank 4 is supplied from the outlet port 4p of the water tank 4 to the inlet port 2i of the evaporating portion 2. The water pump 80 is provided at the water supply passage 8 so as to send the water in the water tank 4 via a discharge port 80p to the evaporating portion 2. The water supply passage 8 is connected to outside air via the evaporating portion 2, the reforming portion 3, and the fuel cell 1, for example. The water pump 80 may be provided at the outlet port 4p of the water tank 4.

A water sensor 87 is provided at the water supply passage 8, specifically, is arranged at the downstream side of the water pump 80 and at the upstream side of the evaporating portion 2. The water sensor 87 may be desirably arranged at the water supply passage 8 in the vicinity of the inlet port 2i of the evaporating portion 2. That is, in a state where an overall length of the water supply passage 8 extending from the outlet port 4p of the water tank 4 to the inlet port 2i of the evaporating portion 2 is defined to be 100, the water tank 4 may be desirably arranged within a range of 70 to 99 from the outlet port 4p of the water tank 4, specifically, within a range of 80 to 90.

A flow meter for measuring a flow rate of water is not provided at the water supply passage 8. This is because water supplied to the water supply passage 8 per time unit is small, a detection accuracy of the flow meter may not be sufficient. Nevertheless, according to circumstances, the flow meter may be provided at the water supply passage 8 for the purpose of checking a calculation result, for example.

As illustrated in Fig. 6, the control portion 100 is provided to control the water pump 80 via a drive circuit. The control portion 100 includes an input processing circuit 100a, an output processing circuit 100b, a CPU 100c including a timer function, and a memory 100m functioning as a memory portion. The control portion 100 receives detection signals of the water sensor 87, the pressure sensor 61, and the temperature sensor 57. The control portion 100 controls the water pump 80, in addition to the second gas pump 71, the first gas pump 60, the shutoff valve 69, and a warning device 102.

Before the power generating operation is performed, the control portion 100 performs a warming-up operation prior to the power generating operation. In the warming-up operation, the control portion 100 supplies fuel gas flowing through the fuel gas passage 6 to the combusting portion 105 via the fuel cell 1 of the power generation module 18 by driving the first gas pump 60 while the shutoff valve 69 is being opened. The control portion 100 also drives the second gas pump 71 to supply air flowing through the cathode gas passage 70 to the combusting portion 105 via the cathode 11 of the power generation module 18. Because an ignition portion ignites the combusting portion 105, the fuel gas (for example, city gas) is burnt by air. The fuel gas is continuously burnt at the combusting portion 105 to thereby heat up the reforming portion 3, the evaporating portion 2, and the fuel cell 1. In a case where the temperature of the evaporating portion 2 turns to a predetermined temperature or more, the water pump 80 is driven to start a reforming process so that the combustion at the combusting portion 15 is continued by reformed gas resulting from the reforming process and cathode gas. The reforming portion 3, the evaporating portion 2, and the fuel cell 1 are heated up. When each of the reforming portion 3, the evaporating portion 2, and the fuel cell 1 is heated up to a predetermined temperature range, the control portion 100 terminates the warming-up operation and starts the power generating operation.

When the control portion 100 drives the water pump 80, the water in the water tank 4 is supplied from the outlet port 4p of the water tank 4 by flowing through the water supply passage 8 to the evaporating portion 2 via the inlet port 2i. The water is heated at the evaporating portion 2 to form water vapor. The thus generated water vapor moves to the reforming portion 3 together with fuel supplied from the fuel gas passage 6. The fuel gas is reformed by the water vapor at the reforming portion 3 to form anode gas (gas including hydrogen). The anode gas is supplied to the anode 10 of the fuel cell 1 by flowing through an anode gas passage 73. Further, cathode gas (gas including oxygen and air within the casing 5) is supplied to the cathode 11 of the fuel cell 1 by flowing through the cathode gas passage 70 by the driving of the second gas pump 71. As a result, the fuel cell 1 generates an electric power. Cathode-off gas discharged from the cathode 11 includes oxygen that has not been used in the power generation reaction. Anode-off gas discharged from the anode 10 includes hydrogen that has not been used in the power generation reaction. Accordingly, the anode-off gas is burnt by the cathode-off gas at the combusting portion 105 during the power generating operation so that the reforming portion 3 and the evaporating portion 2 are heated up to be suitable for the reforming reaction.

In the warming-up operation and the power generating operation, exhaust gas at a high temperature generated at the power generation module 18 is discharged to the outside of the case 5 via an exhaust gas passage 75 as illustrated in Fig. 5. A heat exchanger 76 having a condensation function is provided at the exhaust gas passage 75. A hot water storage passage 78 connected to a hot water storage tank 77 is connected to the heat exchanger 76. A hot water storage pump 79 is provided at the hot water storage passage 78. The hot water storage passage 78 includes an outward passage 78a and an inward passage 78c. A low temperature water in the hot water storage tank 77 is discharged from a discharge port 77p of the hot water storage tank 77 by the driving of the hot water storage pump 79 so as to flow through the outward passage 78a and is heated at the heat exchanger 76 by the exhaust gas. The water heated by the heat exchanger 76 is returned to the hot water storage tank 77 from a return port 77i by flowing through the inward passage 78c. Accordingly, the hot water is obtained at the hot water storage tank 77. The water vapor included in the aforementioned exhaust gas is condensed at the heat exchanger 76 to form condensed water. The condensed water is supplied to a purification portion 43 because of the effect of gravity, for example, via a condensed water passage 42 extending from the heat exchanger 76. The purification portion 43 and the water tank 4 are arranged at a lower side of the power generation module 18 accordingly.

Because the purification portion 43 includes a water purifier 43a such as an ion-exchange resin, for example, an impure substance contained in the condensed water is removed. The water where the impure substance is removed moves to the water tank 4 and is stored thereat. When the water pump 80 is driven in a normal mode, the water in the water tank 4 is supplied to the evaporating portion 2 at the high temperature via the water supply passage 8 and is then supplied to the reforming portion 3 after the water turns to the water vapor at the evaporating portion 2. The water (water vapor) is consumed at the reforming portion 3 in the reforming reaction for reforming the fuel gas. A general formula (1) described below is obtained by a water vapor reforming. (1) Cₙ Hₘ + nH₂O → nCO + [(m/2) + n] H₂, wherein values n and m indicate specific integer numbers. In a case where n=1 and m=4, the water vapor reforming of methane (CH₄) is performed.

According to the fuel cell system of the present embodiment, in a case where a command for stopping or terminating the power generating operation of the fuel cell 1 is output, the control portion 100 performs the stop mode for cooling an inside of the power generation module 18 (i.e., the fuel cell 1, for example) while bringing or maintaining the power generation module 18 in a reducing atmosphere. In the stop mode, a smaller volume of water than that in the power generating operation is supplied to the reformer 2A from the water pump 80 and a smaller volume of fuel gas than that in the power generating operation is supplied to the evaporating portion 2 of the reformer 2A from the first gas pump 60 to thereby generate a small volume of hydrogen containing gas by the reforming reaction. Hydrogen forms the reducing atmosphere and thus an excess oxidation within the power generation module 18 is restrained, which leads to an improved durability. In the stop mode, the second gas pump 71 is driven to supply cathode gas to the cathode 11 of the fuel cell 1 to thereby cool down the inside of the power generation module 18. In a case where the power generation module 18 is cooled down to a predetermined temperature or lower, the possibility of oxidation is cleared and thus the stop mode is terminated. Upon the termination of the stop mode, the control portion 100 performs the standby mode for maintaining the water pump 80, the first gas pump 60, and the second gas pump 71 to be stopped until the next power generating operation is initiated. In the standby mode, anode gas, cathode gas, and water are inhibited fro being supplied to the power generation module 18.

According to the fifth embodiment, the control portion 100 may perform the determination process periodically or on an irregular basis during the power generating operation. Further, the control portion 100 may perform the determination process when the power generating operation is not performed, i.e., in the stop mode, when shifting from the stop mode to the standby mode, or in the standby mode. Because the aforementioned modes are not present in the power generating operation of the fuel cell 1, time for the determination process is not limited. Repeating times of the determination process may be increased to improve the determination accuracy. At least in one of cases during the determination process, immediately after the completion of the determination process, and immediately before the start of the determination process, in a state where cathode air is not circulated, the control portion 100 may desirably drive the second gas pump 71 to supply air within the case 5 to the cathode gas passage 70 to thereby dilute fuel gas by air. Accordingly, combustible gas discharged from the anode 10 of the fuel cell 1 is diluted by air. In a case where the shutoff valve 69 and the fuel gas passage 6 are determined to be in the error state while the power generating operation is not performed, malfunctions of the shutoff valve 69 and the fuel gas passage 6 may be cleared by the time the next power generating operation is initiated.

### [Sixth embodiment]

A sixth embodiment will be explained below. The sixth embodiment basically includes the same effects as those of the first to fifth embodiments. In the following, a difference of the sixth embodiment from the first to fifth embodiments will be mainly explained. According to the sixth embodiment, in order to obtain the negative pressure at the passage portion 6m, (i.e., to negatively pressurize the passage portion 6m) for a short time period during the determination process, the number of rotations of the first gas pump 60 per time unit increases by ΔN compared to the number of rotations of the first gas pump 60 immediately before the start of the determination process. In this case, time (a time period) for bringing the passage portion 6m to be the negative pressure after the closing of the shutoff valve 69 is reduced, which may result in a reduction of time for the determination portion. Furthermore, time for the determination process may be reduced by performing the determination process in a case where a power generating load is large or in a case where the number of rotations of the first gas pump 60 is large, for example.

In a case where a time period in which the determination process is performed (i.e., a time period in which the shutoff valve 69 is closed) is longer than a predetermined time period TS, a flow rate of fuel gas (13A) immediately after the completion of the determination process may be insufficient. In this case, immediately after the determination that the closing function of the shutoff valve 69 and the air tightness of the passage portion 6m are normal, i.e., within a time period ΔTw immediately after the completion of the determination process (for example, within 0.5 to 20 seconds), the control portion 100 may increase the number of rotations of the first gas pump 60 per time unit compared to the number of rotations before the determination process is performed to thereby increase a supply volume of fuel gas (13A) by ΔV per time unit. After the elapse of the time period ΔTw, the control portion 100 brings the number of rotations of the first gas pump 60 per time unit back to the number of rotations before the determination process is conducted.

The first to sixth embodiments are not limited to include the aforementioned configurations and may be appropriately modified or changed. The fuel cell system not including the flow meter 64, the buffer tank 65, or the check valve 66 at the fuel gas passage 6 (see Figs. 1 and 2) may be applied. The fuel cell 1 is not limited to a SOFC and may be a polymer electrolyte fuel cell (PEFC), a phosphoric acid fuel cell (PAFC), a molten carbonate fuel cell (MCFC), or any other types of fuel cells. The heating portion 40 provided at the water tank 4 (see Fig. 5) may be omitted.

The first gas supply source is not limited to the first gas pump 60 and may be a fan or a compressor at least for supplying fuel gas. The second gas supply source is not limited to the second gas pump 71 and may be a fan or a compressor at least for supplying cathode gas. The shutoff valve 69 may be a double valve or a single valve.

The pressure sensor 61 may be provided between the desulfurizer 62 and the flow meter 64, between the flow meter 64 and the buffer tank 65, or between the buffer tank 65 and the first gas pump 60. The first to sixth embodiments are suitable for the fuel cell system of a stationary type. Alternatively, the first to sixth embodiments may be applied to the fuel cell system not equipped with the desulfurizer, or the fuel cell system mounted to a vehicle while including a fuel tank serving as a gas source charged with anode gas, i.e., hydrogen gas, for example.

A method for controlling the fuel cell system, the fuel cell system including the fuel cell 1 including the anode 10 and the cathode 11, the cathode gas passage 70 supplying cathode gas to the cathode 11 of the fuel cell 1, the fuel gas passage 6 supplying fuel gas to the anode 10 of the fuel cell 1, the first gas pump 60 (the first gas supply source) provided at the fuel gas passage 6, the shutoff valve 69 provided at the upstream side relative to the first gas pump 60 at the fuel gas passage 6, and the pressure sensor 61 (the pressure detecting member) detecting the gas pressure of the passage portion 6m between the shutoff valve 69 and the first gas pump 60 at the fuel gas passage 6, the method performs an operation to close the shutoff valve 69 while driving the first gas pump 60 in a case where the shutoff valve 69 is open and the first gas pump 60 is driven to supply fuel gas to the downstream side relative to the first gas pump 60, performs an operation to determine whether or not the pressure P1 of the passage portion 6m detected by the pressure sensor 61 decreases to or below the predetermined pressure PA after the closing of the shutoff valve 69, and determines that the closing function of the shutoff valve 69 is normal and the air tightness of the passage portion 6m is normal in a case where the pressure P1 detected by the pressure sensor 61 decreases to or below the predetermined pressure PA.

The fuel cell system including the fuel cell 1 including the anode 10 and the cathode 11, the cathode gas passage 70 supplying cathode gas to the cathode 11 of the fuel cell 1, the fuel gas passage 6 supplying fuel gas to the anode 10 of the fuel cell 1, the first gas pump 60 (the first gas supply source) provided at the fuel gas passage 6, the shutoff valve 69 provided at the upstream side relative to the first gas pump 60 at the fuel gas passage 6, and the control portion 100 controlling the first gas pump 60 and the shutoff valve 69, wherein the control portion 100 performs the jamming release process for repeatedly and alternately open and close the shutoff valve 69 multiple times. A foreign material stuck in the shutoff valve 69 is likely to be removed to thereby improve the closing failure of the shutoff valve 69. The jamming release process may be performed during the power generating operation or when the power generating operation is stopped (i.e., in the stop mode or the standby mode).

According to the fuel cell system of the first to sixth embodiments, the control portion 100 closes the shutoff valve 69, 69f, 69s while driving the first gas pump 60 (the first gas supply source) in a state where the shutoff valve 69, 69f, 69s is opened and the first gas pump 60 is driven to supply fuel gas to the downstream side relative to the first gas pump 60 at the fuel gas passage 6. The control portion 100 determines the abnormality of the shutoff valve 69, 69f, 69s and the passage portion 6m after the shutoff valve 69, 69f, 69s is closed on a basis of whether or not the pressure P1 of the passage portion 6m detected by the pressure sensor 61 decreases to or below the predetermined pressure PA. That is, in a case where the pressure P1 detected by the pressure sensor 61 decreases to or below the predetermined pressure PA (for example, the passage portion 6m is brought to the negatively pressurized state), the control portion 100 determines in the determination process that the closing function of the shutoff valve 69, 69f, 69s is normal and the air tightness of the passage portion 6m is normal. When the closing function of the shutoff valve 69, 69f, 69s is normal and the air tightness of the passage portion 6m is normal, a decrease of pressure (negative pressurization, for example) of the passage portion 6m is immediately performed. When the closing function of the shutoff valve 69, 69f, 69s or the air tightness of the passage portion 6m is abnormal, outside air or fuel gas that enters the passage portion 6m may inhibit or stop the decrease of pressure (negative pressurization, for example) of the passage portion 6m.

For example, the control portion 100 may determine whether or not the closing function of the shutoff valve 69, 69f, 69s is normal and whether or not the air tightness of the passage portion 6m is normal based on whether or not the pressure P1 of the passage portion 6m decreases to or below the predetermined pressure PA within the predetermined time period TMA from the reference time. Alternatively, the control portion 100 may determine whether or not the closing function of the shutoff valve 69, 69f, 69s is normal and whether or not the air tightness of the passage portion 6m is normal on a basis of the elapsed time TM1 for the pressure P1 of the passage portion 6m to decrease to or below the predetermined pressure PA from the reference time. A case where the pressure of the passage portion 6m is inhibited from decreasing indicates an entry of outside air or fuel gas to the passage portion 6m. Thus, it is determined that the shutoff valve 69, 69f, 69s and the passage portion 6m are abnormal. The reference time may be determined on a basis of time (timing) at which the shutoff valve 69, 69f, 69s is closed. For example, time when a command for closing the shutoff valve 69, 69f, 69s is output or time after the elapse from such time by a short time period serves as the reference time. The predetermined time period TMA may be specified in accordance with types of the fuel cell system, a capacity of the first gas pump 60, a cross-sectional area of a flow passage of the fuel gas passage 6, or a flow passage volume of the fuel gas passage 6 between the shutoff valve 69, 69f, 69s and the first gas pump 60, for example. The predetermined time period TMA may be desirably reduced so as to promptly terminate the determination process in a case where the determination process is performed during the power generating operation. The limitation of the predetermined time period TMA is eased in a case where the determination process is performed while the power generating operation is not performed because a consideration of influence on the power generating operation is unnecessary.

According to the fuel cell system of the aforementioned embodiments, whether or not the closing function of the shutoff valve 69, 69f, 69s provided at the fuel gas passage 6 and the air tightness of the passage portion 6m are normal may be easily determined.
A fuel cell system includes a fuel gas passage (6), a first gas supply source (60), a shutoff valve (69, 69f, 69s) provided at an upstream side relative to the first gas supply source at the fuel gas passage, a pressure detecting member (61) detecting a gas pressure (P1) of a passage portion (6m) of the fuel gas passage (6) between the shutoff valve and the first gas supply source, and a control portion (100). The control portion determines in a determination process whether or not the gas pressure decreases to or below a predetermined pressure (PA) after controlling the shutoff valve to be closed while driving the first gas supply source, and determines that a closing function of the shutoff valve is normal and an air tightness of the passage portion is normal in a case where the gas pressure decreases to or below the predetermined pressure.

## Claims

1. A fuel cell system comprising:
a fuel cell (1) including an anode (10) and a cathode (11);
a cathode gas passage (70) supplying cathode gas to the cathode (11) of the fuel cell (1);
a fuel gas passage (6) supplying fuel gas to the anode (10) of the fuel cell (1);
a first gas supply source (60) provided at the fuel gas passage (6);
a shutoff valve (69, 69f, 69s) provided at an upstream side in view of a flow direction of fuel gas relative to the first gas supply source (60) at the fuel gas passage (6); and
a control portion (100) receiving a detection signal from a pressure detecting member (61) and controlling the first gas supply source (60) and the shutoff valve (69, 69f, 69s),
**characterized in that**
the fuel cell system further comprising
the pressure detecting member (61) configured for detecting a gas pressure (P1) of a passage portion (6m) of the fuel gas passage (6) between the shutoff valve (69, 69f, 69s) and the first gas supply source (60); and
a buffer tank (65) provided between the shutoff valve (69, 69f, 69s) and the first gas supply source (60); and
the control portion (100) configured for performing a determination process in a state where the control portion (100) controls the shutoff valve (69, 69f, 69s) to be opened and drives the first gas supply source (60) to supply fuel gas to a downstream side in view of the flow direction of fuel gas relative to the first gas supply source (60) at the fuel gas passage (6), the control portion (100) determining in the determination process whether or not the gas pressure (P1) of the passage portion (6m) detected by the pressure detecting member (61) decreases to or below a predetermined pressure (PA) after the control portion (100) controls the shutoff valve (69, 69f, 69f) to be closed while driving the first gas supply source (60), the control portion (100) determining that a closing function of the shutoff valve (69, 69f, 69s) is normal and an air tightness of the passage portion (6m) is normal in a case where the gas pressure (P1) of the passage portion (6m) detected by the pressure detecting member (61) decreases to or below the predetermined pressure (PA); and
wherein the determination process is performed during a power generating operation of the fuel cell (1), and the control portion (100) continues the power generating operation in a case where the shutoff valve (69, 69f, 69s) and the passage portion (6m) are determined to be normal in the determination process, the control portion (100) outputting an alert in a case where the shutoff valve (69, 69f, 69s) and the passage portion (6m) are inhibited from being determined to be normal in the determination process; and
the shutoff valve (69) includes a first shutoff valve (69f) and a second shutoff valve (69s) arranged in series at the fuel gas passage (6), the first shutoff valve (69f) being provided at the upstream side while the second shutoff valve (69s) being provided at the downstream side at the fuel gas passage (6), and wherein the control portion (100) performs a first determination process and thereafter a second determination process in a state where the control portion (100) controls the first shutoff valve (69f) and the second shutoff valve (69s) to be opened and drives the first gas supply source (60) to supply fuel gas to the downstream side relative to the first gas supply source (60) at the fuel gas passage (6), the control portion (100) determining in the first determination process whether or not the gas pressure (P1) of the passage portion (6m) detected by the pressure detecting member (61) decreases to or below the predetermined pressure (PA) after the control portion (100) controls one of the first shutoff valve (69f) and the second shutoff valve (69s) to be closed while driving the first gas supply source (60), the control portion (100) determining in the first determination process that the closing function of the one of the first shutoff valve (69f) and the second shutoff valve (69s) is normal and the air tightness of the passage portion (6m) is normal in a case where the gas pressure (P1) of the passage portion (6m) detected by the pressure detecting member (61) decreases to or below the predetermined pressure (PA), the control portion (100) determining in the second determination process whether or not the gas pressure (P1) of the passage portion (6m) detected by the pressure detecting member (61) decreases to or below the predetermined pressure (PA) after the control portion (100) controls the other of the first shutoff valve (69f) and the second shutoff valve (69s) to be closed while driving the first gas supply source (60), the control portion (100) determining in the second determination process that the closing function of the other of the first shutoff valve (69f) and the second shutoff valve (69s) is normal and the air tightness of the passage portion (6m) is normal in a case where the gas pressure (P1) of the passage portion (6m) detected by the pressure detecting member (61) decreases to or below the predetermined pressure (PA).

2. The fuel cell system according to claim 1, wherein the control portion (100) outputs a command to the shutoff valve (69, 69f, 69s) to repeatedly and alternately open and close multiple times in a case where the closing function of the shutoff valve (69, 69f, 69s) and the air tightness of the passage portion (6m) are inhibited from being determined to be normal in the determination process and thereafter performs the determination process again.

3. The fuel cell system according to claim 1, wherein the cathode gas passage (70) includes a second gas supply source (71) supplying cathode gas to the cathode (11) of the fuel cell (1), the cathode gas passage (70) being configured in a manner that gas discharged from the anode (10) of the fuel cell (1) and cathode gas or cathode-off gas discharged from the cathode (11) of the fuel cell (1) via the second gas supply source (71) are converged at the cathode gas passage (70), and wherein the control portion (100) performs a dilution operation for diluting gas discharged from the anode (10) of the fuel cell (1) with cathode gas or cathode-off gas discharged from the cathode (11) of the fuel cell (1) by driving the second gas supply source (71) to supply cathode gas to the cathode gas passage (70) in one of cases during the determination process, immediately after the determination process is performed, and immediately before the determination process is performed.

4. The fuel cell system according to claim 1, wherein the cathode gas passage (70) includes a second gas supply source (71) supplying cathode gas to the cathode (11) of the fuel cell (1),
wherein the fuel gas passage (6) supplying fuel gas before being reformed to a reformer (2A) includes a desulfurizer (62) desulfurizing fuel gas and the reformer (2A) reforming fuel gas that is desulfurized by the desulfurizer (62) into anode gas including hydrogen by a reforming reaction based on water vapor generated by water that is supplied by a water supply source (80), and
wherein the control portion (100) performs a stop mode for cooling the fuel cell (1) by cathode gas supplied to the cathode (11) of the fuel cell (1) by driving the second gas supply source (71) while maintaining the anode (10) of the fuel cell (1) in a reducing atmosphere by driving the first gas supply source (60) to supply fuel gas to the reformer (2A) to generate hydrogen containing gas by the reforming reaction in a case where a command for terminating a power generating operation is output, the control portion (100) performing a standby mode after the stop mode for maintaining the first gas supply source (60) and the second gas supply source (71) to be stopped, the control portion (100) performing the determination process in one of cases in the stop mode, shifting from the stop mode to the standby mode, and in the standby mode.

## Patentansprüche

1. Brennstoffzellensystem mit:
einer Brennstoffzelle (1) mit einer Anode (10) und einer Kathode (11);
einem Kathodengaskanal (70), der Kathodengas zu der Kathode (11) der Brennstoffzelle (1) liefert;
einem Brennstoffgaskanal (6), der Brennstoffgas zu der Anode (10) der Brennstoffzelle (1) liefert;
einer ersten Gaslieferquelle (60), die an dem Brennstoffgaskanal (6) vorgesehen ist;
einem Abschaltventil (69, 69f, 69s), das an einer stromaufwärtigen Seite im Hinblick auf eine Strömungsrichtung des Brennstoffgases relativ zu der ersten Gaslieferquelle (60) an dem Brennstoffgaskanal (6) vorgesehen ist; und
einem Steuerabschnitt (100), der ein Erfassungssignal von einem Druckerfassungselement (61) empfängt und die erste Gaslieferquelle (60) und das Abschaltventil (69, 69f, 69s) steuert,
**dadurch gekennzeichnet, dass**
das Brennstoffzellensystem des Weiteren Folgendes aufweist:
das Druckerfassungselement (61), das so aufgebaut ist, dass es einen Gasdruck (P1) eines Kanalabschnittes (6m) des Brennstoffgaskanals (6) zwischen dem Abschaltventil (69, 69f, 69s) und der ersten Gaslieferquelle (60) erfasst; und
einen Puffertank (65), der zwischen dem Abschaltventil (69, 69f, 69s) und der ersten Gaslieferquelle (60) vorgesehen ist; und
den Steuerabschnitt (100), der so aufgebaut ist, dass er einen Bestimmungsprozess in einem Zustand ausführt, bei dem der Steuerabschnitt (100) das Abschaltventil (69, 69f, 69s) so steuert, dass es offen ist und die erste Gaslieferquelle (60) so antreibt, dass Brennstoffgas zu einer stromabwärtigen Seite im Hinblick auf die Strömungsrichtung des Brennstoffgases relativ zu der ersten Gaslieferquelle (60) an dem Brennstoffgaskanal (6) geliefert wird, wobei der Steuerabschnitt (100) in dem Bestimmungsprozess bestimmt, ob der Gasdruck (P1) des Kanalabschnittes (6m), der durch das Druckerfassungselement (61) erfasst wird, auf den vorbestimmten Druck (PA) oder unterhalb diesem abnimmt oder nicht, nachdem der Steuerabschnitt (100) das Abschaltventil (69, 69f, 69s) so steuert, dass es schließt, während die erste Gaslieferquelle (60) angetrieben ist, wobei der Steuerabschnitt (100) bestimmt, dass eine Schließfunktion des Abschaltventils (69, 69f, 69s) normal ist und eine Luftdichtheit des Kanalabschnittes (6m) normal ist in einem Fall, bei dem der Gasdruck (P1) des Kanalabschnittes (6m), der durch das Druckerfassungselement (61) erfasst wird, auf den vorbestimmten Druck (PA) oder unterhalb von diesem abnimmt; und
wobei der Bestimmungsprozess während eines Stromerzeugungsvorgangs der Brennstoffzelle (1) ausgeführt wird, und der Steuerabschnitt (100) den Stromerzeugungsvorgang in einem Fall fortsetzt, bei dem das Abschaltventil (69, 69f, 69s) und der Kanalabschnitt (6m) als normal in dem Bestimmungsprozess bestimmt sind, und der Steuerabschnitt (100) eine Warnung in einem Fall ausgibt, bei dem verhindert ist, dass das Abschaltventil (69, 69f, 69s) und der Kanalabschnitt (6m) in dem Bestimmungsprozess als normal bestimmt werden; und
wobei das Abschaltventil (69) ein erstes Abschaltventil (69f) und ein zweites Abschaltventil (69s) umfasst, die in Reihe an dem Brennstoffgaskanal (6) angeordnet sind, wobei das erste Abschaltventil (69f) an der stromaufwärtigen Seite vorgesehen ist, während das zweite Abschaltventil (69s) an der stromabwärtigen Seite an dem Brennstoffgaskanal (6) vorgesehen ist, und wobei der Steuerabschnitt (100) einen ersten Bestimmungsprozess und danach einen zweiten Bestimmungsprozess in einem Zustand ausführt, bei dem der Steuerabschnitt (100) das erste Abschaltventil (69f) und das zweite Abschaltventil (69s) so steuert, dass sie offen sind, und die erste Gaslieferquelle (60) so antreibt, dass sie Brennstoffgas zu der stromabwärtigen Seite relativ zu der ersten Gaslieferquelle (60) an dem Brennstoffgaskanal (6) liefert, wobei der Steuerabschnitt (100) in dem ersten Bestimmungsprozess bestimmt, ob der Gasdruck (P1) des Gaskanals (6m), der durch das Druckerfassungselement (61) erfasst wird, auf den vorbestimmten Druck (PA) oder unterhalb von diesem abnimmt oder nicht, nachdem der Steuerabschnitt (100) entweder das erste Abschaltventil (69f) oder das zweite Abschaltventil (69s) so steuert, dass es geschlossen ist, während die erste Gaslieferquelle (60) angetrieben wird, wobei der Steuerabschnitt (100) in dem ersten Bestimmungsprozess bestimmt, dass die Schließfunktion des ersten Abschaltventils (69f) oder des zweiten Abschaltventils (69s) normal ist und die Luftdichtheit des Kanalabschnittes (6m) normal ist in einem Fall, bei dem der Gasdruck (P1) des Kanalabschnittes (6m), der durch das Druckerfassungselement (61) erfasst wird, auf den vorbestimmten Druck (PA) oder unterhalb diesem abnimmt, wobei der Steuerabschnitt (100) in dem zweiten Bestimmungsprozess bestimmt, ob der Gasdruck (P1) des Kanalabschnittes (6m), der durch das Druckerfassungselement (61) erfasst wird, auf den vorbestimmten Druck (PA) oder unterhalb diesem abnimmt oder nicht, nachdem der Steuerabschnitt (100) das andere Abschaltventil, d.h. das zweite Abschaltventil (69s) oder das erste Abschaltventil (69f) so steuert, dass es schließt, während die erste Gaslieferquelle (60) angetrieben wird, wobei der Steuerabschnitt (100) in dem zweiten Bestimmungsprozess bestimmt, dass die Schließfunktion des anderen Abschaltventils, d.h. des zweiten Abschaltventils (69s) oder des ersten Abschaltventils (69f) normal ist und die Luftdichtheit des Kanalabschnittes (6m) normal ist in einem Fall, bei dem der Gasdruck (P1) des Kanalabschnittes (6m), der durch das Druckerfassungselement (61) erfasst wird, auf den vorbestimmten Druck (PA) oder unterhalb diesem abnimmt.

2. Brennstoffzellensystem gemäß Anspruch 1, wobei der Steuerabschnitt (100) ein Befehl zu dem Abschaltventil (69, 69f, 69s) ausgibt zum wiederholten und abwechselnden Öffnen und Schließen in mehrfacher Weise in einem Fall, bei dem verhindert ist, dass die Schließfunktion des Abschaltventils (69, 69f, 69s) und die Luftdichtheit des Kanalabschnittes (6m) als normal in dem Bestimmungsprozess bestimmt werden, und danach den Bestimmungsprozess erneut ausführt.

3. Brennstoffzellensystem gemäß Anspruch 1, wobei der Kathodengaskanal (70) eine zweite Gaslieferquelle (71) aufweist, die Kathodengas zu der Kathode (11) der Brennstoffzelle (1) liefert, wobei der Kathodengaskanal (70) in einer solchen Weise aufgebaut ist, dass von der Anode (10) der Brennstoffzelle (1) abgegebenes Gas und Kathodengas oder Kathodenabgas, das von der Kathode (11) der Brennstoffzelle (1) über die zweite Gaslieferquelle (71) abgegeben wird, an dem Kathodengaskanal (70) zusammentreffen, und wobei der Steuerabschnitt (100) einen Verdünnungsvorgang zum Verdünnen von Gas, das von der Anode (10) der Brennstoffzelle (1) abgegeben wird, mit Kathodengas oder Kathodenabgas, das von der Kathode (11) der Brennstoffzelle (1) abgegeben wird, ausführt durch Antreiben der zweiten Gaslieferquelle (71) zum Liefern von Kathodengas zu dem Kathodengaskanal (70) in einem der Fälle während des Bestimmungsprozesses, unmittelbar nachdem der Bestimmungsprozess ausgeführt wird, und unmittelbar bevor der Bestimmungsprozess ausgeführt wird.

4. Brennstoffzellensystem gemäß Anspruch 1, wobei der Kathodengaskanal (70) eine zweite Gaslieferquelle (71) aufweist, die Kathodengas zu der Kathode (11) der Brennstoffzelle (1) liefert,
wobei der Brennstoffgaskanal (6), der Brennstoffgas liefert, bevor es zu einem Reformer (2A) reformiert wird, eine Entschwefeleinrichtung (62) hat, die Brennstoffgas entschwefelt, und den Reformer (2A) hat, der Brennstoffgas, das durch die Entschwefelungseinrichtung (62) entschwefelt worden ist, zu Anodengas, das Wasserstoff hat, durch eine Reformierreaktion auf der Basis von Wasserdampf reformiert, der durch Wasser erzeugt wird, das durch eine Wasserversorgungsquelle (80) geliefert wird, und
wobei der Steuerabschnitt (100) einen Anhaltemodus ausführt zum Kühlen der Brennstoffzelle (1) durch Kathodengas, das zu der Kathode (11) der Brennstoffzelle (1) geliefert wird durch Antreiben der zweiten Gaslieferquelle (71), während die Anode (10) der Brennstoffzelle (1) in einer reduzierenden Atmosphäre gehalten wird durch Antreiben der ersten Gaslieferquelle (60) zum Liefern von Brennstoffgas zu dem Reformer (2A), um Wasserstoff enthaltendes Gas zu erzeugen, durch die Reformierreaktion in einem Fall, bei dem ein Befehl zum Beenden eines Stromerzeugungsvorgangs ausgegeben ist, wobei der Steuerabschnitt (100) einen Bereitschaftsmodus ausführt nach dem Anhaltemodus zum Beibehalten des Anhaltens des ersten Gaslieferquelle (60) und der zweiten Gaslieferquelle (71), wobei der Steuerabschnitt (100) den Bestimmungsprozess in einem der Fälle bei dem Anhaltemodus ausführt, von dem Anhaltemodus zu dem Bereitschaftsmodus schaltet, und in dem Bereitschaftsmodus ausführt.

## Revendications

1. Système de pile à combustible comprenant :
une pile à combustible (1) comprenant une anode (10) et une cathode (11) ;
un passage de gaz de cathode (70) amenant le gaz de cathode à la cathode (11) de la pile à combustible (1) ;
un passage de gaz combustible (6) amenant le gaz combustible à l'anode (10) de la pile à combustible (1) ;
une première source d'alimentation en gaz (60) prévue au niveau du passage de gaz combustible (6) ;
une valve d'arrêt (69, 69f, 69s) prévue du côté en amont en vue d'une direction d'écoulement du gaz combustible par rapport à la première source d'alimentation en gaz (60) au niveau du passage de gaz combustible (6) ; et
une partie de commande (100) recevant un signal de détection d'un élément de détection de pression (61) et commandant la première source d'alimentation en gaz (60) et la valve d'arrêt (69, 69f, 69s),
**caractérisé en ce que** :
le système de pile à combustible comprenant en outre :
l'élément de détection de pression (61) configuré pour détecter une pression de gaz (P1) d'une partie de passage (6m) du passage de gaz combustible (6) entre la valve d'arrêt (69, 69f, 69s) et la première source d'alimentation en gaz (60) ; et
un réservoir tampon (65) prévu entre la valve d'arrêt (69, 69f, 69s) et la première source d'alimentation en gaz (60) ; et
la partie de commande (100) configurée pour réaliser un procédé de détermination dans un état dans lequel la partie de commande (100) commande la valve d'arrêt (69, 69f, 69s) pour qu'elle s'ouvre et entraîne la première source d'alimentation en gaz (60) pour amener le gaz combustible à un côté en aval en vue de la direction d'écoulement du gaz combustible par rapport à la première source d'alimentation en gaz (60) au niveau du passage de gaz combustible (6), la partie de commande (100) déterminant, dans le procédé de détermination, si la pression de gaz (P1) de la partie de passage (6m) détectée par l'élément de détection de pression (61) diminue ou pas au niveau de ou au-dessous d'une pression (PA) prédéterminée après que la partie de commande (100) a commandé la valve d'arrêt (69, 69f, 69s) pour qu'elle se ferme tout en entraînant la première source d'alimentation en gaz (60), la partie de commande (100) déterminant qu'une fonction de fermeture de la valve d'arrêt (69, 69f, 69s) est normale et une étanchéité à l'air de la partie de passage (6m) est normale dans un cas dans lequel la pression de gaz (P1) de la partie de passage (6m) détectée par l'élément de détection de pression (61) diminue au niveau de ou au-dessous de la pression (PA) prédéterminée ; et
dans lequel le procédé de détermination est réalisé pendant une opération de génération de puissance de la pile à combustible (1), et la partie de commande (100) continue l'opération de génération de puissance dans un cas dans lequel la valve d'arrêt (69, 69f, 69s) et la partie de passage (6m) sont déterminées comme étant normales dans le procédé de détermination, la partie de commande (100) émettant une alerte dans un cas dans lequel la valve d'arrêt (69, 69f, 69s) et la partie de passage (6m) ne peuvent pas être déterminées comme étant normales dans le procédé de détermination ; et
la valve d'arrêt (69) comprend une première valve d'arrêt (69f) et une seconde valve d'arrêt (69s) agencées en série au niveau du passage de gaz combustible (6), la première valve d'arrêt (69f) étant prévue du côté en amont alors que la seconde valve d'arrêt (69s) est prévue du côté en aval au niveau du passage de gaz combustible (6), et dans lequel la partie de commande (100) réalise un premier procédé de détermination et ensuite un second procédé de détermination dans un état dans lequel la partie de commande (100) commande la première valve d'arrêt (69f) et la seconde valve d'arrêt (69s) pour qu'elles s'ouvrent et entraîne la première source d'alimentation en gaz (60) pour amener le gaz combustible au côté en aval par rapport à la première source d'alimentation en gaz (60) au niveau du passage de gaz combustible (6), la partie de commande (100) déterminant, dans le procédé de détermination, si la pression de gaz (P1) de la partie de passage (6m) détectée par l'élément de détection de pression (61) diminue ou pas au niveau de ou au-dessous de la pression (PA) prédéterminée après que la partie de commande (100) a commandé l'une parmi la première valve d'arrêt (69f) et la seconde valve d'arrêt (69s) pour qu'elle se ferme, tout en entraînant la première source d'alimentation en gaz (60), la partie de commande (100) déterminant dans le premier procédé de détermination que la fonction de fermeture de l'une parmi la première valve d'arrêt (69f) et la seconde valve d'arrêt (69s) est normale et que l'étanchéité à l'air de la partie de passage (6m) est normale dans un cas dans lequel la pression de gaz (P1) de la partie de passage (6m) détectée par l'élément de détection de pression (61) diminue au niveau ou au-dessous de la pression (PA) prédéterminée, la partie de commande (100) déterminant dans le second procédé de détermination si la pression de gaz (P1) de la partie de passage (6m) détectée par l'élément de détection de pression (61) diminue ou pas au niveau de ou au-dessous de la pression (PA) prédéterminée après que la partie de commande (100) a commandé l'autre parmi la première valve d'arrêt (69f) et la seconde valve d'arrêt (69s) pour qu'elle se ferme tout en entraînant la première source d'alimentation en gaz (60), la partie de commande (100) déterminant dans le second procédé de détermination que la fonction de fermeture de l'autre parmi la première valve d'arrêt (69f) et la seconde valve d'arrêt (69s) est normale et que l'étanchéité à l'air de la partie de passage (6m) est normale dans un cas dans lequel la pression de gaz (P1) de la partie de passage (6m) détectée par l'élément de détection de pression (61) diminue au niveau de ou au-dessous de la pression (PA) prédéterminée.

2. Système de pile à combustible selon la revendication 1, dans lequel la partie de commande (100) envoie une commande à la valve d'arrêt (69, 69f, 69s) pour qu'elle s'ouvre et se ferme à plusieurs reprises et de manière alternée plusieurs fois dans un cas dans lequel la fonction de fermeture de la valve d'arrêt (69, 69f, 69s) et l'étanchéité à l'air de la partie de passage (6m) ne peuvent pas être déterminées comme étant normales dans le procédé de détermination et ensuite réalise à nouveau le procédé de détermination.

3. Système de pile à combustible selon la revendication 1, dans lequel le passage de gaz de cathode (70) comprend une seconde source d'alimentation en gaz (71) amenant le gaz de cathode à la cathode (11) de la pile à combustible (1), le passage de gaz de cathode (70) étant configuré de sorte que le gaz déchargé de l'anode (10) de la pile à combustible (1) et le gaz de cathode ou le gaz dégagé par la cathode déchargé de la cathode (11) de la pile à combustible (1) via la seconde source d'alimentation en gaz (71) convergent au niveau du passage de gaz de cathode (70), et dans lequel la partie de commande (100) réalise une opération de dilution pour diluer le gaz déchargé de l'anode (10) de la pile à combustible (1) avec le gaz de cathode ou le gaz dégagé par la cathode déchargé de la cathode (11) de la pile à combustible (1) en entraînant la seconde source d'alimentation en gaz (71) pour amener le gaz de cathode au passage de gaz de cathode (70) dans l'un des cas pendant le procédé de détermination, immédiatement après la réalisation du procédé de détermination, et immédiatement avant la réalisation du procédé de détermination.

4. Système de pile à combustible selon la revendication 1, dans lequel le passage de gaz de cathode (70) comprend une seconde source d'alimentation en gaz (71) amenant le gaz de cathode à la cathode (11) de la pile à combustible (1),
dans lequel le passage de gaz combustible (6) amenant le gaz combustible avant d'être reformé par un reformeur (2A) comprend un désulfurant (62) désulfurant le gaz combustible et le reformeur (2A) reformant le gaz combustible qui est désulfuré par le désulfurant (62) en gaz d'anode comprenant de l'hydrogène par une réaction de reformage basée sur la vapeur d'eau générée par l'eau qui est fournie par une source d'alimentation en eau (80), et
dans lequel la partie de commande (100) réalise un mode d'arrêt pour refroidir la pile à combustible (1) par le gaz de cathode amené à la cathode (11) de la pile à combustible (1) en entraînant la seconde source d'alimentation en gaz (71) tout en maintenant l'anode (10) de la pile à combustible (1) dans une atmosphère de réduction en entraînant la première source d'alimentation en gaz (60) pour amener le gaz combustible au reformeur (2A) afin de générer du gaz contenant de l'hydrogène par la réaction de reformage dans un cas dans lequel une commande pour terminer une opération de génération de puissance est émise, la partie de commande (100) réalisant un mode d'attente après le mode d'arrêt pour maintenir la première source d'alimentation en gaz (60) et la seconde source d'alimentation en gaz (71) à arrêter, la partie de commande (100) réalisant le procédé de détermination dans l'un des cas dans le mode d'arrêt, passant du mode d'arrêt au mode d'attente, et dans le mode d'attente.
